# EUROPÄISCHE PATENTSCHRIFT

(11) **EP 4 420 506 B1**
(45) Veröffentlichungstag und Bekanntmachung des Hinweises auf die Patenterteilung: **01.10.2025**
(21) Anmeldenummer: 23216552.2
(22) Anmeldetag: 14.12.2023
(51) Int. Cl.: A01D 41/127, A01F 12/46, A01D 41/12

(54) **ERNTEMASCHINE**
HARVESTING MACHINE
MACHINE DE RÉCOLTE

(30) Priorität: 22.02.2023 DE 102023104330
(43) Veröffentlichungstag der Anmeldung: 28.08.2024
(73) Patentinhaber: CLAAS Selbstfahrende Erntemaschinen GmbH, 33428 Harsewinkel (DE)
(72) Erfinder: Brandmeier, Jonas, 33428 Harsewinkel (DE); Claes, Ulrich, 33790 Halle/Westf. (DE)
(74) Vertreter: CLAAS Gruppe

(56) Entgegenhaltungen:
- EP-A1- 3 420 794
- EP-A1- 3 721 695
- EP-B1- 3 301 407
- US-A- 4 029 228
- US-B1- 6 248 015

## Beschreibung

Die vorliegende Erfindung betrifft eine Erntemaschine wie etwa einen Mähdrescher, und zwar insbesondere die Befüllung eines Ernteguttanks der Erntemaschine, sowie eine dafür ausgebildete Förderschnecke.

Da sich beim Dreschen das Korn von Nichtkornbestanteilen des Ernteguts nach unten absetzt, muss es anschließend aufwärts befördert werden, um einen Ernteguttank des Mähdreschers zu befüllen. Hierzu dient oft ein Elevator mit an einer umlaufenden Kette umlaufenden Schaufeln, die am Boden des Dreschwerks gesammeltes Korn aufnehmen, anheben und über eine Korneinlassöffnung in einer Wand des Ernteguttanks in letzteren abgeben. Auf diese Weise kann der Ernteguttank nicht höher befüllt werden als bis zur Unterkante der Korneinlassöffnung.

Um das Aufnahmevermögen des Ernteguttanks vollständiger nutzen zu können, wird daher in EP 3 721 695 A1 eine erste Förderschnecke vorgeschlagen, die im Innern des Korntanks an der Korneinlassöffnung schwenkbar montiert, vom Elevator abgegebenes Korn aufnimmt und weiter anhebt. Eine zweite Förderschnecke steht mit der ersten Förderschnecke in Förderverbindung. Die zweite Förderschnecke ist im Ernteguttank senkrecht angeordnet und fördert das von der ersten Förderschnecke angelieferte Erntegut weiter senkrecht nach oben. Die Drehzahl beider Förderschnecken wird proportional zu einem erfassten Massenstrom des Ernteguts gesteuert.

Die Förderleistung der ersten und zweiten Förderschnecke ist üblicherweise auf die maximal mögliche Durchsatzleistung ausgelegt. Diese Durchsatzleistung wird allerdings nur zu einem geringen Zeitanteil des jährlichen Einsatzspektrums erreicht. Viele Maschinen erreichen diese Durchsätze aufgrund ihrer Einsatzbedingungen überhaupt nicht.

Hieraus ergibt sich ein erhöhter Verschleiß der Förderschnecken. Zusätzlich erfolgt regelmäßig eine Leistungsabnahme der Förderschnecken die für die vorliegenden Erntebedingungen nicht erforderlich ist.

Es ist deshalb Aufgabe der Erfindung, die beschriebenen Nachteile des Standes der Technik zu vermeiden und insbesondere die Befüllung eines Ernteguttanks einer Erntemaschine an verschiedene Erntebedingungen anpassbar auszuführen.

Diese Aufgabe wird erfindungsgemäß durch die kennzeichnenden Merkmale des Anspruchs 1 gelöst.

Gemäß dem Anspruch 1 wird eine Erntemaschine vorgeschlagen, umfassend einen Ernteguttank mit einer tankinternen ersten Förderschnecke, die sich von einer Guteinlassöffnung an einer Wand des Ernteguttanks ins Innere des Ernteguttanks erstreckt, eine tankinterne zweite Förderschnecke, wobei die zweite Förderschnecke in Förderverbindung mit der ersten Förderschnecke steht, eine Antriebseinheit, wobei die Antriebseinheit trieblich mit der zweiten Förderschnecke verbunden ist, einen Massenstromsensor zur Ermittlung eines Massenstroms, eine Steuerungseinrichtung zur Ansteuerung der Antriebseinheit, wobei die Steuerungseinrichtung derart eingerichtet ist, sodass diese eine Drehzahl der Antriebseinheit in Abhängigkeit des mittels des Massenstromsensors ermittelten Massenstroms ansteuert und die Antriebseinheit unmittelbar an der zweiten Förderschnecke angeordnet ist.

Die Erfindung hat viele Vorteile. Die Förderleistung der zweiten Förderschnecke ist an die Durchsatzleistung der Erntemaschine angepasst. Dies ist besonders Vorteilhaft, da Erntemaschinen die maximale Durchsatzleistung in ihrem jährlichen Einsatzspektrum nur selten erreichen, sodass eine Anpassung der Drehzahl an die momentane Durchsatzleistung zu einer Reduzierung der für den Antrieb der zweiten Förderschnecke erforderlichen Antriebsleistung führt und Verschleißerscheinungen an der zweiten Förderschnecke erheblich reduziert. Die Regelung der Drehzahl der zweiten Förderschnecke in Abhängigkeit des Massenstromsensors bewirkt, dass die Förderleistung der zweiten Förderschnecke im Wesentlichen der Förderleistung der ersten Förderschnecke entspricht. An der zweiten Förderschnecke auftretende Blindleistung wird vermieden. Als Massenstrom ist die Erntegutmenge zu verstehen, die von einem Arbeitsaggregat der Erntemaschine gefördert wird. Besonders bevorzugt handelt es sich bei dem Arbeitsaggregat um den Kornelevator. Bei Identifikation eines geringen Massenstroms mittels des Massenstromsensors wird bevorzugt eine niedrigere Drehzahl an der Antriebseinheit eingestellt, als bei einer Identifikation eines größeren Massenstroms.

Gemäß einer vorteilhaften Ausgestaltung kann die Antriebseinheit unmittelbar an der zweiten Förderschnecke angeordnet sein, wobei vorzugsweise die erste Förderschnecke separat zu der zweiten Förderschnecke angetrieben ist. Die Anordnung der Antriebseinheit unmittelbar an der zweiten Förderschnecke, wobei die Antriebseinheit unmittelbar mit der Welle der zweiten Förderschnecke gekoppelt ist, ermöglicht die Drehzahl der zweiten Förderschnecke unabhängig von der ersten Förderschnecke einzustellen. Mithin kann die Drehzahl der zweiten Förderschnecke optimal an die vorliegende Erntesituation sowie der in dem Ernteguttank befindlichen Erntegutmenge angepasst werden. Ferner ist der separate Antrieb der zweiten Förderschnecke besonders vorteilhaft, da diese somit unabhängig von der ersten Förderschnecke von einer vertikal ausgerichteten Arbeitsposition hin zu einer flacheren Parkposition verschwenkbar ist. Die Antriebseinheit kann als Hydraulikmotor ausgebildet sein.

Eine weitere vorteilhafte Ausgestaltung sieht vor, dass die Steuerungseinrichtung die Drehzahl der Antriebseinheit derart regelt, sodass die Drehzahl der zweiten Förderschnecke eine konstante Mindestdrehzahl aufweist bis eine dem Ernteguttank zugeführte Erntegutmenge eine definierte Füllstandshöhe erreicht und nach Überschreiten der definierten Füllstandshöhe die Drehzahl der zweiten Förderschnecke in Abhängigkeit des Massenstromsensors geregelt ist. Die zweite Förderschnecke ist dazu vorgesehen und eingerichtet, das Erntegut über eine mittels der ersten Förderschnecke erreichbare Füllstandshöhe hinaus weiter zu befüllen. Demgemäß ist der Bedarf einer Förderung des Ernteguts erst ab einer gewissen Füllstandshöhe innerhalb des Ernteguttanks erforderlich. Dennoch ist es besonders vorteilhaft die zweite Förderschnecke bis zum Erreichen der Füllstandshöhe nicht im Stillstand zu lassen, sondern mit einer Mindestdrehzahl zu betreiben. Von der ersten Förderschnecke in Richtung der zweiten Förderschnecke geleitetes Erntegut wird von den Schneckenwindungen der zweiten Förderschnecke umgeleitet. Bei einer ungünstigen Stellung der zweiten Förderschnecke kann das Erntegut fortwährend gegen ein Korntankfenster geleitet werden. Das Korntankfenster gibt einer Person innerhalb der Fahrzeugkabine einen Einblick in den Korntank, wobei gegen das Korntankfenster umgeleitetes Erntegut störende Geräusche in der Fahrerkabine erzeugen kann. Das Betreiben der zweiten Förderschnecke mit der Mindestdrehzahl vermeidet, dass Erntegut fortwährend gegen die Fahrerkabine geleitet wird.

Besonders bevorzugt ist es, wenn die definierte Füllstandshöhe einer Höhe des unteren Endes der zweiten Förderschnecke entspricht. Da erst ab Erreichen dieser Füllstandshöhe die zweite Förderschnecke in dem Ernteguttank befindliches Erntegut wirksam in vertikaler Richtung befördert.

Um Erntegut sicher von einem Kornelevator übernehmen zu können und verlustarm fördern zu können, sollte die erste Förderschnecke von einem Rohr umgeben sein, wobei das Rohr eine Öffnung aufweist, die den Ausstritt von Erntegut in den Ernteguttank erlaubt. Dadurch, dass die erste Förderschnecke von einem Rohr umgeben ist, wird der zweiten Förderschnecke auch im Wesentlichen der von dem Massenstromsensor ermittelte Massenstrom zugeführt, sodass die Drehzahl der zweiten Förderschnecke optimal an den dieser zugeführten Massenstrom anpassbar ist.

Eine vorteilhafte Weiterbildung sieht vor, dass die zweite Förderschnecke nicht verrohrt ist. Das heißt, dass die zweite Förderschnecke entlang ihrer Länge von keinem Rohr umgeben ist. Derartige unverrohrte zweite Förderschnecken werden häufig bei Erntemaschinen innerhalb des Ernteguttanks eingesetzt. Besonders für derartige unverrohrte zweite Förderschnecken ist die massenstromabhängige Drehzahlregelung besonders vorteilhaft, zumal ab der definierten Füllstandshöhe die zweite Förderschnecke zumindest abschnittsweise von Erntegut umgeben ist, sodass bereits in dem Ernteguttank befindliches Erntegut in den Hüllkreis der zweiten Förderschnecke gelangen kann und von dieser erneut in vertikale Richtung befördert wird. Es ist also möglich, dass Erntegut im Kreis gefördert wird. Die zweite Förderschnecke ist jedoch dazu vorgesehen, dass von der ersten Förderschnecke geförderte Erntegut anzunehmen und aus dem Abgabebereich der ersten Förderschnecke abzufördern um diese zu entlasten. Die Massenstromabhängige Regelung bewirkt nun, dass bei einer geringen Fördermenge der ersten Förderschnecke eine geringe Drehzahl an der zweiten Förderschnecke eingestellt ist. Zusätzliche, sogenannte Wühlarbeit, wobei bereits innerhalb des Ernteguttanks befindliches Erntegut in den Hüllkreis der zweiten Förderschnecke rutscht, wird zumindest reduziert.

Gemäß einer vorteilhaften Ausgestaltung kann die Erntemaschine eine Fördervorrichtung, insbesondere Kornelevator, umfassen, welche zum Fördern des aus Erntegut bestehenden Massenstroms von einem tiefer gelegenen Erntegutannahmebereich zu einem höher gelegenen Erntegutabgabebereich vorgesehen und eingerichtet ist, wobei der Massenstromsensor zum Ermitteln des Massenstroms der Fördervorrichtung zugeordnet ist. Ein derartiger Kornelevator ist der ersten Förderschnecke vorgeordnet. Das von dem Kornelevator geförderte Erntegut wird verlustfrei der ersten Förderschnecke zugeführt und von dieser hin zu dem Annahmebereich der zweiten Förderschnecke befördert. Eine Anordnung des Massenstromsensors innerhalb des Kornelevators ist somit besonders geeignet, um den Massenstrom zu bestimmen, welcher der zweiten Förderschnecke zugeführt wird.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen schematischen Schnitt durch einen Mähdrescher mit Förderschnecke gemäß der Erfindung;
- Figur 2: einen schematischen Schnitt durch den Ernteguttank eines Mähdreschers;
- Figur 3: eine Teilansicht eines Kornelevators eines Mähdreschers.

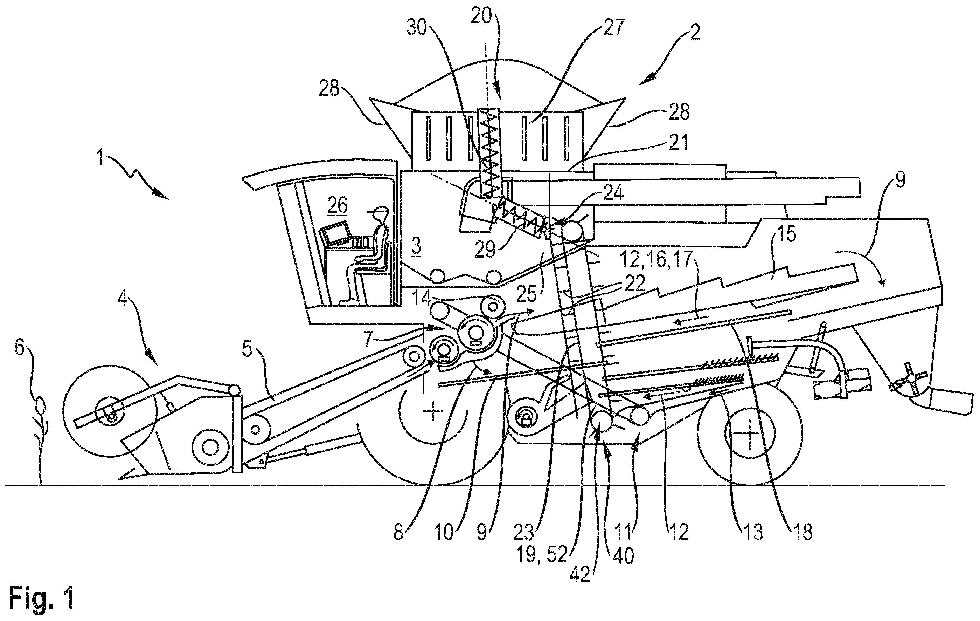

Fig. 1 zeigt einen schematischen Längsschnitt durch eine als Mähdrescher ausgebildete Erntemaschine 1 mit einer faltbaren Erweiterungsvorrichtung 2 zur Vergrößerung des Volumens eines Ernteguttanks 3. Der Mähdrescher ist frontseitig mit einem Schneidwerk 4 ausgestattet, das an einem Schrägförderer 5 angeordnet ist. Mit dem Schneidwerk 4 nimmt der Mähdrescher das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 unterteilt wird. Das Korn-Spreu-Gemisch 8 wird über einen Vorbereitungsboden 10 direkt zu einer Reinigungseinrichtung 11 gefördert, die das Korn 12 von den Nichtkornbestandteilen 13, das heißt von Halm- und Spreuteilen trennt.

Hinter dem Dreschwerk 7 ist eine entgegen dem Uhrzeigersinn rotierende Wendetrommel 14 angeordnet, die den aus ausgedroschenen Halmen bestehenden Gutstrom 9 auf einen Hordenschüttler 15 fördert. Der Hordenschüttler 15 trennt noch im Gutstrom 9 vorhandenes Korn 12, Kurzstroh 16 und Spreu 17, die über einen Rücklaufboden 18 ebenfalls in die Reinigungseinrichtung 11 gelangen. Die von der Reinigungseinrichtung 11 abgetrennten Körner 12 fördert eine als Kornelevator 19 ausgebildete Fördervorrichtung 52 in den Ernteguttank 3.

Der Kornelevator 19 umfasst eine mit Schaufeln 22 bestückte, endlos umlaufende Förderkette 23. Die Schaufeln 22 übernehmen das Korn 12 von der Reinigungseinrichtung 11 und fördern es in einem Schacht aufwärts bis zu einer Guteinlassöffnung 24 in einer Wand 25 des Ernteguttanks 3.

Der Ernteguttank 3 ist als ein Behälter mit im Wesentlichen rechteckförmiger Grundfläche ausgeführt und hinter einer Fahrerkabine 26 des Mähdreschers angeordnet. Der Ernteguttank 3 weist an seiner Oberseite eine Öffnung 20 auf, an Oberkanten 21 seiner Wände sind mehrere die Erweiterungsvorrichtung 2 bildende plattenförmige Elemente 27, 28 angelenkt. Die Platten 27, 28 sind zwischen einer über der Öffnung miteinander überlappenden geschlossenen Position und einer in Fig. 1 gezeigten Arbeitsstellung schwenkbar, in der die Erweiterungsvorrichtung 2 den Ernteguttank 3 nach oben trichterförmig erweitert.

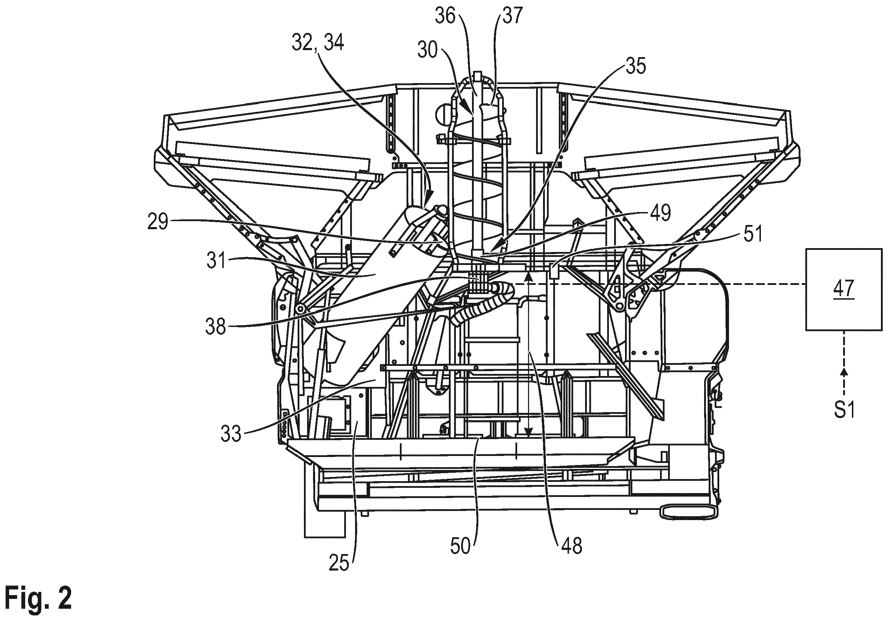

In der Schnittansicht der Fig. 2 sind eine erste und zweite Förderschnecke 29, 30 ersichtlich, die sich jeweils in ihrer Arbeitsstellung befinden. Die erste Förderschnecke 29 ist radial außenseitig von einem sich über die Länge der ersten Förderschnecke 29 erstreckenden Rohr 31 umgeben. Auf der Auswurfseite 34 der ersten Förderschnecke 29 umfasst das Rohr 31 eine Öffnung 32, durch die mittels der ersten Förderschnecke 29 Erntegut 6 in den Ernteguttank 3 förderbar ist. Eine Basis 33 der ersten Förderschnecke 29 ist an der Wand 25 benachbart zur Guteinlassöffnung 24 montiert, um die erste Förderschneck 29 so vor der Guteinlassöffnung 24 zu platzieren, dass durch die Guteinlassöffnung 24 gefördertes Erntegut 6 von der ersten Förderschnecke 29 aufgenommen werden kann. Zu diesem Zweck kann ein offenes Ende des Rohrs 31 unmittelbar vor der Guteinlassöffnung 24 platziert sein.

Die erste Förderschnecke 29 kann an einem Antrieb des Kornelevators 19 mittelbar oder unmittelbar gekoppelt sein, um mit dem Kornelevator 19 zwangsweise trieblich gekoppelt zu sein. Mithin ist die Förderleistung der ersten Förderschnecke 29 automatisch an die Förderleistung des Kornelevators 19 angepasst. Die erste Förderschnecke 29 ist schwenkbar an der Basis 33 angeordnet. In der in Fig. 2 gezeigten Arbeitsstellung der ersten Förderschnecke 29 sind das Rohr 31 und die darin verlaufende erste Förderschnecke 29 in eine ansteigende Stellung geschwenkt. Die Steigung der ersten Förderschnecke 29 beträgt hier wenigstens 30 Grad, vorzugsweise ca. 45 Grad. Die Auswurfseite 34 ist mittig über der offenen Oberseite des Ernteguttanks 3 platziert. Die zweite Förderschnecke 30 erstreckt sich vertikal innerhalb des Ernteguttanks 3 und ist mittig innerhalb des Ernteguttanks 3 positioniert. Die erste Förderschnecke 29 steht mit der zweiten Förderschnecke 30 in Förderverbindung. Das bedeutet im Sinne der vorliegenden Anmeldung, dass die erste und zweite Förderschnecke 29, 30 derart zueinander positioniert sind, sodass die erste Förderschnecke 29 das Erntegut 6 hin zu einem Annahmebereich 35 der zweiten Förderschnecke 30 fördert. Im bestimmungsgemäßen Betriebszustand der zweiten Förderschnecke 30 fördert diese das Erntegut 6 ausgehend von ihrem Annahmebereich 35 in eine vertikale Richtung.

Die zweite Förderschnecke 30 wird separat zu der ersten Förderschnecke 29 angetrieben. Die zweite Förderschnecke 30 ist trieblich mit einer Antriebseinheit 38 gekoppelt, wobei an der Welle 36 der zweiten Förderschnecke 30, die von Schneckenwindungen 37 radial außenseitig umgeben ist, unmittelbar die Antriebseinheit 38 angeordnet ist. Die Antriebseinheit 38 ist dazu vorgesehen und eingerichtet, die zweite Förderschnecke 30 in einen rotierenden Zustand zu versetzen. Die Antriebseinheit 38 ist als ein Hydraulikmotor ausgebildet. Weiterhin umfasst die Erntemaschine 1 eine in Fig. 2 schematisch dargestellte Steuerungseinrichtung 47, welche zur Ansteuerung der Antriebseinheit 38 vorgesehen und eingerichtet ist.

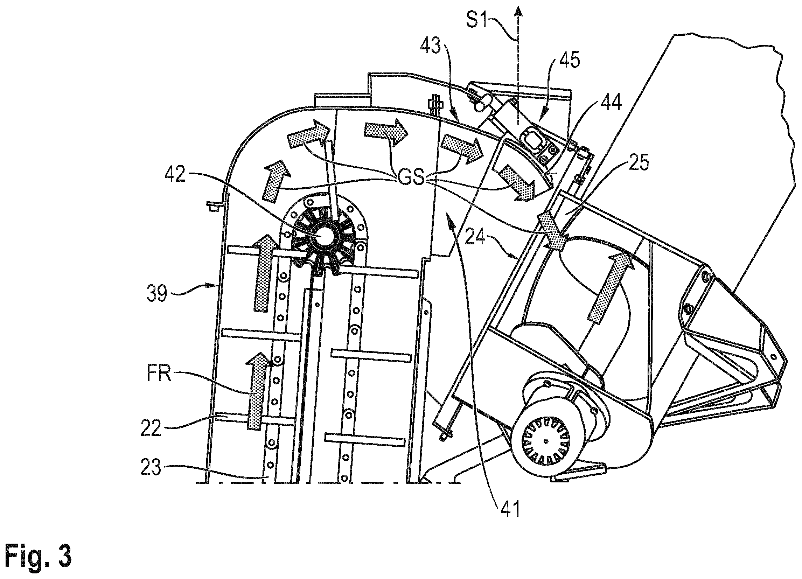

In Fig. 3 ist eine Teilansicht des Kornelevators 19 dargestellt. Der Kornelevator 19 umfasst ein Gehäuse 39, welches die endlos umlaufende Förderkette 23, die um jeweils ein im Erntegutannahmebereich 40 und im Erntegutabgabebereich 41 angeordnetes unteres und oberes Ketten- bzw. Antriebsrad 42 angetrieben und umgelenkt wird, weitgehend umschließt. Im Erntegutannahmebereich 40 sowie im Erntegutabgabebereich 41 weist das Gehäuse 39 Öffnungen auf, durch welche das Erntegut zugeführt und abgeführt wird. An der endlos umlaufenden Förderkette 23 sind gleichmäßig zueinander beabstandet flächige Schaufeln 22 angeordnet. Die Förderrichtung ist durch Pfeile FR gekennzeichnet.

Im Erntegutabgabebereich 41 umfasst der Kornelevator 19 einen Führungsabschnitt 43, der den von dem Kornelevator 19 geförderten aus Erntegut 6 bestehenden Massenstrom hin zu der Guteinlassöffnung 24 des Ernteguttanks 3 leitet. Pfeile GS veranschaulichen den Strömungsverlauf des sich entlang des Führungsabschnitts 43 sowie einer Sensorfläche 44 bewegenden Massen- bzw. Erntegutstromes. An dem Führungsabschnitt 43 ist eine Massenstromsensor 45 angeordnet. Der Massenstromsensor 45 umfasst eine Kraftmesszelle 46, die der Sensorfläche 44 zugeordnet ist. Der entlang der Führungsfläche geleitete Massenstrom wirkt auf die Sensorfläche 44 eine Kraft aus, die mittels der Kraftmesszelle 46 gemessen werden. Die Steuerungseinrichtung 47 ist in signalübertragender Weise mit dem Massenstromsensor 45 verbunden. Mittels der Messwerte S1 des Massenstromsensors 45 wird in der Steuerungseinrichtung 47 der Massenstrom bzw. der Durchsatz des Massenstroms bestimmt. Details zu dem Massenstromsensor 45 sowie der Bestimmung des Durchsatzes des Massenstroms sind in der EP 3 301 407 B1 offenbart, dessen Offenbarungsgehalt hiermit vollumfänglich in diese Anmeldung aufgenommen ist.

Der mittels des Massenstromsensor 45 ermittelte Massenstrom wird von der Steuerungseinrichtung 47 zur Ansteuerung der Antriebseinheit 38 der zweiten Förderschnecke 30 verwendet. Hierfür ist die Steuerungseinrichtung 47 derart eingerichtet, sodass diese eine Drehzahl der Antriebseinheit 38 und somit eine Drehzahl der zweiten Förderschnecke 30 bedarfsweise an den Massenstrom anpasst. Hier und vorzugsweise regelt die Steuerungseinrichtung 47 die Drehzahl der Antriebseinheit 38 derart, sodass eine Förderleistung bzw. die Drehzahl der zweiten Förderschnecke 30 proportional zu dem ermittelten Massenstrom ist. Der von der zweiten Förderschnecke 30 geförderte Massenstrom entspricht somit im Wesentlichen dem von der ersten Förderschnecke 29 und dem Kornelevator 19 geförderten Massenstrom. Die benötigte Antriebsleistung der zweiten Förderschnecke 30 sowie der Verschleiß selbiger wird hierdurch deutlich reduziert.

Die zweite Förderschnecke 30 ist nicht verrohrt ausgebildet. Demgemäß kann die zweite Förderschnecke 30 radial außenseitig umgebendes Erntegut 6 in den Hüllkreis der Schneckenwindungen 37 der zweiten Förderschnecke 30 gelangen und von dieser in vertikaler Richtung gefördert werden. Anders als die vorgeschaltete erste Förderschnecke 29 und der Kornelevator 19 fördert die zweite Förderschnecke 30 ab einem gewissen Füllstand des Ernteguts 6 innerhalb des Ernteguttanks 3 den ihrer Förderleistung entsprechenden Massenstrom in vertikale Richtung. Die Regelung der Drehzahl in Abhängigkeit des im Kornelevators 19 geförderten Massenstroms reduziert somit die Menge von Erntegut 6, das von der zweiten Förderschnecke 30 innerhalb des Ernteguttanks 3 im Kreis gefördert wird.

Hier und vorzugsweise regelt die Steuerungseinrichtung 47 die Drehzahl der zweiten Förderschnecke 30 derart, sodass diese mit einer voreingestellten Mindestdrehzahl angetrieben wird, bis das in dem Ernteguttank 3 befindliche Erntegut 6 eine definierte Füllstandshöhe 48 erreicht hat. Nachdem das in dem Ernteguttank 3 befindliche Erntegut 6 die Füllstandshöhe 48 überschritten hat, regelt die Steuerungseinrichtung 47 die Drehzahl der Antriebseinheit 38 bzw. die Drehzahl der zweiten Förderschnecke 30 in Abhängigkeit des in dem Kornelevator 19 mittels des Massenstromsensors 45 ermittelten Massenstroms, wobei die Drehzahl nach überschreiten der Füllstandshöhe 48 größer ist, als die Mindestdrehzahl. Hierbei entspricht die definierte Füllstandshöhe 48 der Höhe des unteren Endes 49 der zweiten Förderschnecke 30. Mit anderen Worten ausgedrückt, wird die zweite Förderschnecke 30 mit einer Mindestdrehzahl betrieben, bis das in dem Ernteguttank 3 befindliche Erntegut 6 das untere Ende 49 der zweiten Förderschnecke 30 erreicht hat. Nachdem diese Füllstandshöhe 48 das untere Ende 49 der zweiten Förderschnecke 30 erreicht hat, wird die Drehzahl der zweiten Förderschnecke 30 in Abhängigkeit des Massenstromsensors 45 bzw. des in dem Kornelevator 19 ermittelten Massenstroms geregelt. Als das untere Ende 49 der zweiten Förderschnecke 30 ist im Sinne der vorliegenden Erfindung das Ende zu verstehen, welches dem Boden 50 des Ernteguttanks 3 zugewandt ist. Zum Ermitteln der Füllstandshöhe 48 des in dem Ernteguttank 3 befindlichen Ernteguts 6 kann auf Höhe des unteren Endes 49 der zweiten Förderschnecke 30 ein Füllstandsensor 51 angeordnet sein. Bevor das in dem Ernteguttank 3 befindliche Erntegut 6 das untere Ende 49 der zweiten Förderschnecke 30 erreicht, besteht kein Bedarf das Erntegut 6 mittels der zweiten Füllschnecke 30 in vertikale Richtung zu befördern, sodass durch das Antreiben mit einer Mindestdrehzahl Antriebsleistung eingespart wird. Dennoch ist das Betreiben der zweiten Förderschnecke 30 mit der geringen Mindestdrehzahl besonders vorteilhaft, da hierdurch von der ersten Förderschnecke 29 gegen die zweite Förderschnecke 30 gefördertes Erntegut gleichmäßiger innerhalb des Ernteguttanks 3 verteilt wird. Auch wird vermieden, dass durch eine ungünstige Ausrichtung der Schneckenwindungen 37 der zweiten Förderschnecke 30 gegen die zweite Förderschnecke 30 gefördertes Erntegut 6 fortwährend in Richtung einer hier nicht dargestellten Kabinenscheibe umgeleitet wird und damit einhergehend für eine in der Kabine 26 befindliche Person störende Geräusche auftreten.

**Bezugszeichenliste:**

| | | | |
|---|---|---|---|
| 1 | Erntemaschine | 34 | Auswurfseite |
| 2 | Erweiterungsvorrichtung | 35 | Annahmebereich |
| 3 | Ernteguttank | 36 | Welle |
| 4 | Schneidwerk | 37 | Schneckenwindungen |
| 5 | Schrägförderer | 38 | Antriebseinheit |
| 6 | Erntegut | 39 | Gehäuse |
| 7 | Dreschwerk | 40 | Erntegutannahmebereich |
| 8 | Korn-Spreu-Gemisch | 41 | Erntegutabgabebereich |
| 9 | Gutstrom | 42 | Kettenrad |
| 10 | Vorbereitungsboden | 43 | Führungsabschnitt |
| 11 | Reinigungseinrichtung | 44 | Sensorfläche |
| 12 | Korn | 45 | Massenstromsensor |
| 13 | Nichtkornbestandteile | 46 | Kraftmesszelle |
| 14 | Wendetrommel | 47 | Steuerungseinrichtung |
| 15 | Hordenschüttler | 48 | Füllstandshöhe |
| 16 | Kurzstroh | 49 | Ende zweite Förderschnecke |
| 17 | Spreu | 50 | Boden |
| 18 | Rücklaufboden | 51 | Füllstandsensor |
| 19 | Kornelevator | 52 | Fördervorrichtung |
| 20 | Öffnung | | |
| 21 | Oberkante | S1 | Messwerte |
| 22 | Schaufel | GS | Pfeil |
| 23 | Förderkette | FR | Pfeil |
| 24 | Guteinlassöffnung | | |
| 25 | Wand | | |
| 26 | Fahrerkabine | | |
| 27 | Platte | | |
| 28 | Platte | | |
| 29 | Erste Förderschnecke | | |
| 30 | Zweite Förderschnecke | | |
| 31 | Rohr | | |
| 32 | Öffnung | | |
| 33 | Basis | | |

## Patentansprüche

1. Erntemaschine (1) umfassend
- einen Ernteguttank (3) mit einer tankinternen ersten Förderschnecke (29), die sich von einer Guteinlassöffnung (24) an einer Wand (25) des Ernteguttanks (3) ins Innere des Ernteguttanks (3) erstreckt;
- eine tankinterne zweite Förderschnecke (30), wobei die zweite Förderschnecke (30) in Förderverbindung mit der ersten Förderschnecke (29) steht;
- eine Antriebseinheit (38), wobei die Antriebseinheit (38) trieblich mit der zweiten Förderschnecke (30) verbunden ist;
- einen Massenstromsensor (45) zur Ermittlung eines Massenstroms;
- eine Steuerungseinrichtung (47) zur Ansteuerung der Antriebseinheit (38);
wobei die Steuerungseinrichtung (47) derart eingerichtet ist, sodass diese eine Drehzahl der Antriebseinheit (38) in Abhängigkeit des mittels des Massenstromsensors (45) ermittelten Massenstroms ansteuert,
**dadurch gekennzeichnet, dass** die Antriebseinheit (38) unmittelbar an der zweiten Förderschnecke (30) angeordnet ist.

2. Erntemaschine (1) nach Anspruch 1, **dadurch gekennzeichnet, dass** die erste Förderschnecke (29) separat zu der zweiten Förderschnecke (30) angetrieben ist.

3. Erntemaschine (1) nach einem der Ansprüche 1 oder 2, **dadurch gekennzeichnet, dass** die Steuerungseinrichtung (47) die Drehzahl der Antriebseinheit (38) derart regelt, sodass die Drehzahl der zweiten Förderschnecke (30) eine konstante Mindestdrehzahl aufweist bis eine dem Ernteguttank (3) zugeführte Erntegutmenge eine definierte Füllstandshöhe (48) erreicht und nach Überschreiten der definierten Füllstandshöhe (48) die Drehzahl der zweiten Förderschnecke (30) in Abhängigkeit des Massenstromsensors (45) geregelt ist.

4. Erntemaschine (1) nach Anspruch 3, **dadurch gekennzeichnet, dass** die definierte Füllstandshöhe (48) einer Höhe des unteren Endes (49) der zweiten Förderschnecke (30) entspricht.

5. Erntemaschine (1) nach einem der Ansprüche 1 bis 4, **dadurch gekennzeichnet, dass** die erste Förderschnecke (29) wenigstens auf einem Teil ihrer Länge von einem Rohr (31) umgeben ist, wobei das Rohr (31) eine Öffnung (32) aufweist, die den Ausstritt von Erntegut (6) in den Ernteguttank (3) erlaubt.

6. Erntemaschine (1) nach einem der Ansprüche 1 bis 5, **dadurch gekennzeichnet, dass** die zweite Förderschnecke (30) nicht verrohrt ist.

7. Erntemaschine (1) nach einem der Ansprüche 1 bis 6, **dadurch gekennzeichnet, dass** die Erntemaschine (1) eine Fördervorrichtung (52), insbesondere Kornelevator (19), umfasst, welche zum Fördern des aus Erntegut (6) bestehenden Massenstroms von einem tiefer gelegenen Erntegutannahmebereich (40) zu einem höher gelegenen Erntegutabgabebereich (41) vorgesehen und eingerichtet ist, wobei der Massenstromsensor (45) zum Ermitteln des Massenstroms der Fördervorrichtung (52) zugeordnet ist.

## Claims

1. A harvesting machine (1) comprising
- a harvested material tank (3) with a first feeder auger (29) which is inside the tank and extends from a material intake opening (24) on one wall (25) of the harvested material tank (3) into the interior of the harvested material tank (3);
- a second feeder auger (30) inside the tank, wherein the second feeder auger (30) is in conveying connection with the first feeder auger (29);
- a drive unit (38), wherein the drive unit (38) is operatively connected to the second feeder auger (30);
- a mass flow sensor (45) for determining a mass flow;
- a control device (47) for controlling the drive unit (38);
wherein the control device (47) is configured in a manner such that it controls a speed of the drive unit (38) in dependence on the mass flow determined by means of the mass flow sensor (45),
**characterized in that** the drive unit (38) is disposed directly on the second feeder auger (30).

2. The harvesting machine (1) according to claim 1, **characterized in that** the first feeder auger (29) is driven separately from the second feeder auger (30).

3. The harvesting machine (1) according to claim 1 or claim 2, **characterized in that** the control device (47) regulates the speed of the drive unit (38) in a manner such that the speed of the second feeder auger (30) has a constant minimum speed until a quantity of harvested material fed to the harvested material tank (3) reaches a defined fill height (48) and after exceeding the defined fill height (48) the speed of the second feeder auger (30) is regulated in dependence on the mass flow sensor (45).

4. The harvesting machine (1) according to claim 3, **characterized in that** the defined fill height (48) corresponds to a height of the lower end (49) of the second feeder auger (30).

5. The harvesting machine (1) according to any one of claims 1 to 4, **characterized in that** the first feeder auger (29) is surrounded by a tube (31) over at least a portion of its length, wherein the tube (31) has an opening (32) which enables harvested material (6) to be discharged into the harvested material tank (3).

6. The harvesting machine (1) according to any one of claims 1 to 5, **characterized in that** the second feeder auger (30) is not surrounded by a tube.

7. The harvesting machine (1) according to any one of claims 1 to 6, **characterized in that** the harvesting machine (1) comprises a conveyor device (52), in particular a grain elevator (19), which is provided and configured to convey the mass flow consisting of harvested material (6) from a lower harvested material receiving region (40) to a higher harvested material discharge region (41), wherein the mass flow sensor (45) for determining the mass flow is associated with the conveyor device (52).

## Revendications

1. Machine de récolte (1), comprenant
- une trémie pour produits récoltés (3) dotée d'une première vis convoyeuse (29) interne à la trémie, qui s'étend depuis une ouverture d'admission de produits (24), sur une paroi (25) de la trémie pour produits récoltés (3), à l'intérieur de la trémie pour produits récoltés (3) ;
- une deuxième vis convoyeuse (30) interne à la trémie, la deuxième vis convoyeuse (30) étant en relation de convoyage avec la première vis convoyeuse (29) ;
- une unité d'entraînement (38), l'unité d'entraînement (38) étant en liaison motrice avec la deuxième vis convoyeuse (30),
- un capteur de débit massique (45) destiné à déterminer un débit massique ;
- un dispositif de commande (47) destiné à piloter l'unité d'entraînement (38) ;
le dispositif de commande (47) étant conçu pour contrôler une vitesse de rotation de l'unité d'entraînement (38) en fonction du débit massique déterminé au moyen du capteur de débit massique (45),
**caractérisée en ce que** l'unité d'entraînement (38) est disposée directement sur la deuxième vis convoyeuse (30).

2. Machine de récolte (1) selon la revendication 1, **caractérisée en ce que** la première vis convoyeuse (29) est entraînée séparément de la deuxième vis convoyeuse (30).

3. Machine de récolte (1) selon une des revendications 1 ou 2, **caractérisée en ce que** le dispositif de commande (47) règle la vitesse de rotation de l'unité d'entraînement (38) de manière à ce que la vitesse de rotation de la deuxième vis convoyeuse (30) présente une vitesse de rotation minimale constante, jusqu'à ce qu'une quantité de produits récoltés amenée à la trémie pour produits récoltés (3) atteigne une hauteur de remplissage (48) définie et, après dépassement de la hauteur de remplissage (48) définie, la vitesse de rotation de la deuxième vis convoyeuse (30) soit réglée en fonction du capteur de débit massique (45).

4. Machine de récolte (1) selon la revendication 3, **caractérisée en ce que** la hauteur de remplissage (48) définie correspond à une hauteur de l'extrémité inférieure (49) de la deuxième vis convoyeuse (30).

5. Machine de récolte (1) selon une des revendications 1 à 4, **caractérisée en ce que** la première vis convoyeuse (29) est entourée d'un tube (31) au moins sur une partie de sa longueur, le tube (31) présentant une ouverture (32) qui permet la sortie des produits récoltés (6) dans la trémie pour produits récoltés (3).

6. Machine de récolte (1) selon une des revendications 1 à 5, **caractérisée en ce que** la deuxième vis convoyeuse (30) n'est pas dotée d'un tube.

7. Machine de récolte (1) selon une des revendications 1 à 6, **caractérisée en ce que** la machine de récolte (1) comprend un dispositif convoyeur (52), notamment un élévateur de grains (19), qui est prévu et conçu pour transporter le débit massique, constitué de produits récoltés (6), depuis une zone de prise en charge de produits récoltés (40) basse jusqu'à une zone de distribution de produits récoltés (41) haute, le capteur de débit massique (45) destiné à déterminer le débit massique étant associé au dispositif convoyeur (52).
